(19) Europäisches Patentamt
European Patent Office
Office européen des brevets

(11) **EP 2 315 200 B1**

(12) **EUROPÄISCHE PATENTSCHRIFT**

(45) Veröffentlichungstag und Bekanntmachung des Hinweises auf die Patenterteilung:
**03.07.2013 Patentblatt 2013/27**

(51) Int Cl.:
*G10K 11/00* (2006.01)    *H04M 9/08* (2006.01)
*H04S 7/00* (2006.01)    *H04B 3/23* (2006.01)

(21) Anmeldenummer: **09173656.1**

(22) Anmeldetag: **21.10.2009**

(54) **Adaptive MIMO-Filterung in dynamisch angepassten Transformationsbereichen**

Adaptive MIMO filtering in dynamically adjusted transformation areas

Filtrage MIMO adaptatif dans des zones de transformation adaptées dynamiquement

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**27.04.2011 Patentblatt 2011/17**

(73) Patentinhaber: **Deutsche Telekom AG**
**53113 Bonn (DE)**

(72) Erfinder:
• **Buchner, Herbert**
**93152 Nittendorf (DE)**
• **Spors, Sascha**
**10243 Berlin (DE)**
• **Helwani, Karim**
**10829 Berlin (DE)**

(74) Vertreter: **Vossius & Partner**
**Siebertstrasse 4**
**81675 München (DE)**

(56) Entgegenhaltungen:
**DE-A1- 10 351 793**

• **BUCHNER H ET AL: "A general derivation of Wave-Domain Adaptive Filtering and application to acoustic echo cancellation" SIGNALS, SYSTEMS AND COMPUTERS, 2008 42ND ASILOMAR CONFERENCE ON, IEEE, PISCATAWAY, NJ, USA, 26. Oktober 2008 (2008-10-26), Seiten 816-823, XP031475399 ISBN: 978-1-4244-2940-0**
• **PERETTI P ET AL: "A Novel Approach to Active Noise Control Based on Wave Domain Adaptive Filtering" APPLICATIONS OF SIGNAL PROCESSING TO AUDIO AND ACOUSTICS, 2007 IEEE WO RKSHOP ON, IEEE, PI, 1. Oktober 2007 (2007-10-01), Seiten 307-310, XP031167108 ISBN: 978-1-4244-1618-9**
• **SPORS SASCHA ET AL: "Active listening room compensation for massive multichannel sound reproduction systems using wave-domain adaptive filtering" THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, Bd. 122, Nr. 1, 1. Juli 2007 (2007-07-01), Seiten 354-369, XP012102317 ISSN: 0001-4966**

**Beschreibung**

Die Erfindung betrifft ein Verfahren und eine Vorrichtung zur adaptiven MIMO-Filterung in dynamisch angepassten Transformationsbereichen.

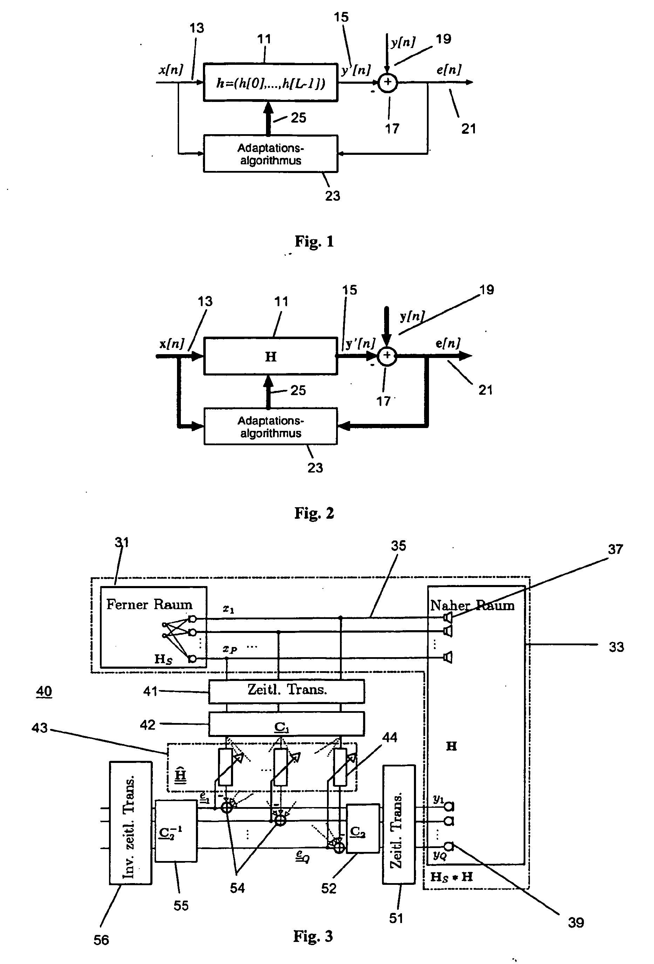

Die DE 103 51 793 A1 [8] betrifft eine adaptive Filtervorrichtung und ein Verfahren zum Verarbeiten eines akustischen Eingangssignals. Auf diese Druckschrift wird vollinhaltlich Bezug genommen. Wie insbesondere darin beschrieben, stellen adaptive zeitdiskrete Filter eine weitverbreitete Technik in der digitalen Signalverarbeitung dar. Ein solches adaptives Filter ist ein Filter für die digitale Signalverarbeitung, das die Eigenschaft besitzt, seine Übertragungsfunktion in Betrieb selbstständig verändern zu können. Fig. 1 zeigt ein Beispiel für eine einkanalige adaptive Filterung. Es besteht aus einem adaptiven Filter 11 mit einem Eingang 13 und einem Ausgang 15. Das adaptive Filter 11 weist L Filterkoeffizienten auf, die zu einem Vektor $\mathbf{h}$=(h[0], ..., h[L-1]) zusammengefasst sind. An dem Eingang 13 des Filters 11 liegt ein Eingangssignal in Form einer Folge x[n] an. Diese ankommende Folge durchläuft das adaptive Filter und liegt am Ausgang 15 als Ausgangsfolge y'[n] an. Der Ausgang 15 ist mit einem Summierer 17 gekoppelt, der an einem weiteren Eingang 19 ein Wunschsignal y[n] erhält. Der Summierer bildet die Differenz und gibt diese als Fehlersignal e[n] aus. Die Vorrichtung weist weiterhin einen Block 23 auf, der einen Adaptionsalgorithmus durchführt. Dieser Block erhält zum Einen das Eingangssignal x[n] und zum Anderen das Fehlersignal e[n]. Der Block 23 weist einen Ausgang 25 auf, der mit dem Filter 11 gekoppelt ist. Über den Ausgang 25 werden die von dem Adaptionsalgorithmus in dem Block 23 bestimmten Filterkoeffizienten an das Filter 11 geliefert.

Dieses adaptive Filter arbeitet nach dem bekannten Prinzip, das darin besteht, Filterkoeffizienten (zusammen-gefasst zu einem Vektor $\mathbf{h}$) so zu bestimmen, dass das Ausgangssignal y'[n] des Systems (bzw. eines Ausgangskanals in einem mehrkanaligen System) bei bekanntem Eingangssignal x[n] (bzw. mehreren bekannten Eingangssignalen) einem Wunschsignal y[n] (bzw. mehreren Wunschsignalen bei einem mehrkanaligen System) angenähert wird. Dies wird hier erreicht durch eine blockweise Minimierung des Fehlersignals e[n]=y[n]-y'[n] (bzw. mehrerer Fehlersignale bei einem mehrkanaligen System) nach einem bestimmten Kriterium (üblicherweise nach dem mittleren quadratischen Fehler). Die Blocklänge kann größer oder gleich einem Abtastwert sein. Die Optimierung der Filterkoeffizienten kann rekursiv oder nichtrekursiv erfolgen. Fig. 2 zeigt die entsprechende mehrkanalige Version, bei der die mehrkanaligen Signalpfade fett dargestellt sind, und die mehreren Signale jeweils durch Vektoren beschrieben werden. Bei mehreren Eingangskanälen und mehreren Ausgangskanälen stellt das adaptive System $\mathbf{H}$ im Allgemeinen ein vollbesetztes MIMO-System (Multiple-Input and Multiple-Output) dar, welches durch eine Matrix beschrieben werden kann. Üblicherweise wird bei derartigen adaptiven Systemen von Impulsantworten mit endlicher zeitlicher Ausdehnung ausgegangen (FIR, engl. Finite Impulse Response), da bei diesen während der Adaption Stabilität gewährleistet ist.

Ein bekanntes Anwendungsbeispiel für die mehrkanalige adaptive Filterung ist die sog. akustische Echokompensation, welche für vollduplex Kommunikation in Freisprecheinrichtungen, wie z.B. in Telekonferenzsystemen benötigt wird. Ein derartiger Aufbau wird in Fig. 3 gezeigt. Von einem fernen Senderaum 31 wird in einen lokalen Konferenzraum 33 (‚Naher Raum') ein mehrkanaliges Audiosignal über Leitungen 35 mittels P Lautsprecherkanälen übertragen (Signale $x_I$, ..., $x_P$) und von einer Anzahl P Lautsprechern 37 im lokalen Konferenzraum 33 ausgegeben. Gleichzeitig werden im nahen Raum 33 von den lokalen Sprechern Mikrofonsignale $y_1$, ..., $y_Q$ mittels einer Anzahl Q Mikrofonen 39 aufgenommen. Um nun bei Vollduplexkommunikation eine Rückkopplung der aus dem fernen Raum kommenden Lautsprechersignale über die Mikrofone zurück zum fernen Senderaum 31 oder beispielsweise zu einem automatischen Spracherkennungssystem usw. zu verhindern, werden durch einen akustischen Echokompensator die PxQ akustischen Signalpfade des nahen Raums 33 mittels eines adaptiven MIMO-Filters 40 nachgebildet, und die nachgebildeten Echos werden sodann von den aufgenommenen Mikrofonsignalen $y_1$ ..., $y_Q$ subtrahiert.

Bei einer derartigen mehrkanaligen adaptiven Filterung gibt es zwei wesentliche bekannte Probleme: Einerseits die relativ hohe Rechenkomplexität aufgrund der Systemstruktur (es müssen PxQ Signalpfade mittels jeweils mehreren tausend Filterkoeffizienten adaptiv nachgebildet werden), andererseits ist die Adaption bei zueinander korrelierten Eingangssignalen des adaptiven Filters in vielen Anwendungsfällen aus numerischen Gründen problematisch. Bei der akustischen Echokompensation ergeben sich beispielsweise die korrelierten Eingangsignale dadurch, dass die Signale meist von nur wenigen gemeinsamen Quellen im fernen Raum stammen. Bei einer Koeffizientenoptimierung durch Minimierung der quadratischen Fehlerleistungen (sog. Least-Squares Problem) weist daher die sich ergebende sog. Normalgleichung eine schlecht konditionierte Korrelationsmatrix auf, so dass zu deren iterativer Lösung im allgemeinen sehr rechenintensive Algorithmen benötigt werden, wie z.B. der Recursive Least-Squares (RLS)-Algorithmus [1].

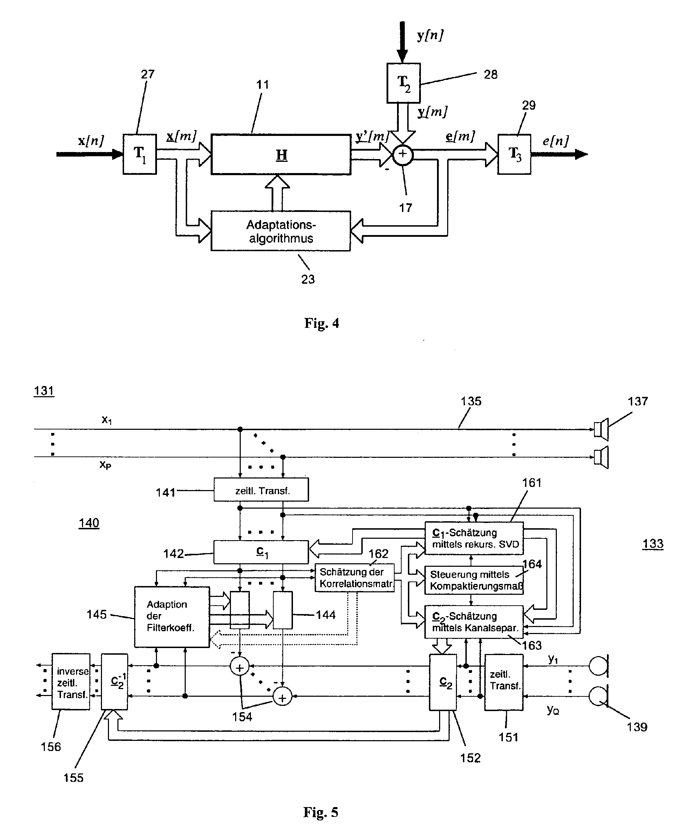

Um diese Probleme teilweise zu umgehen, wurde der Einsatz von adaptiver Filterung in geeigneten Signaltransformationsbereichen vorgeschlagen, wie in Fig. 4 dargestellt. Hierbei stellen die Blöcke 27, 28, 29 mit Matrizen $\mathbf{T}_1$, $\mathbf{T}_2$, $\mathbf{T}_3$ zunächst generische Transformationen dar, z.B. LINEARE Transformationen von mehrkanaligen zeitlichen Folgen. Der Block 27 mit der Matrix $\mathbf{T}_1$ transformiert das Signal x[n] in ein Signal $\underline{x}$[m]. Der Block 28 mit der Matrix $\mathbf{T}_2$ transformiert das Signal y[n] in ein Signal $\underline{y}$[m]. Der Block 29 transformiert ein Signal $\underline{e}$[m] in das Signal e[n]. Zu den weiteren Elementen wird auf die Beschreibung von Figur 3 verwiesen. Bisherige, in der Literatur beschriebene adaptive Ansätze in Transformationsbereichen basieren in der Regel auf *zeitlichen* Transformationen auf den individuellen Signalkanälen, beispielsweise das "Frequency-Domain Adaptive Filtering" (FDAF), welches in [2] für den Mehrkanalfall zusammenfassend dargestellt wurde. Hierbei wird im Wesentlichen die FIR-Struktur der einzelnen (einkanaligen) Teilsysteme ausgenutzt, so dass mit bekannten, zeitlich konstanten Transformationen, insbesondere der Diskreten Fourier-Transformation (DFT) gearbeitet werden kann. Dies bewirkt sowohl einen Komplexitätsgewinn bei den Filteroperationen der einkanaligen Teilsysteme, als auch eine Verbesserung der numerischen Eigenschaften bei der Adaption.

Durch Erweiterung dieser insbesondere aus dem FDAF bekannten Idee wurden in jüngster Zeit verschiedene erste Adaptionsverfahren mit *zeitlichen und räumlichen* Transformationen vorgeschlagen, z.B. [3],[4],[5],[6],[7],[8]. Ziel der räumlichen Transfonnationen ist es, insbesondere bei vielkanaligen Systemen im Zusammenhang mit Sensor- und Aktor-Arrays, z.B. bei Audiowiedergabe mittels Lautsprecher-Arrays bei der sog. Wellenfeldsynthese, siehe z.B. [7], den Einsatz von adaptiven Filteranwendungen, z.B. akustische Echokompensation, zu ermöglichen. Hierbei wird angestrebt, zusätzlich zu den genannten Vorteilen von FDAF auch eine näherungsweise Diagonalisierung, d.h. eine Entkopplung des ursprünglich vollbesetzten adaptiven MIMO-Systems im Transformationsbereich zu erzielen [3].

Ein sehr wesentlicher Unterschied zur rein zeitlichen Transformation ist jedoch, dass für die Wahl von geeigneten räumlichen Transformationen wesentlich weniger strukturelles Vorwissen zur Verfügung steht, so dass bisher in der Praxis nur relativ grobe Näherungen des oben genannten Ziels der MIMO-Systementkopplung erreicht wurden.

Ein erster Näherungsansatz ist das sog. "Wave-Domain Adaptive Filtering" (WDAF), z.B. [6]. Hierbei wird von der physikalischen Beschreibung der Wellenausbreitung durch die Wellengleichung als Vorwissen ausgegangen. Durch bestimmte Geometrieannahmen über die Arraykonfiguration und durch Annahme von Freifeldbedingungen werden die entsprechenden räumlichen Freifeld-Eigenfunktionen, z.B. sphärische Harmonische, als feste Signaltransformationen verwendet.

Das sogenannte "Eigenspace Adaptive Filtering" (EAF), z.B. [4] stellt im Vergleich zu WDAF eine etwas formal allgemeinere Beschreibung dar, indem es von der Singulärwertzerlegung (SVD) des gesuchten MIMO-Systems ausgeht, und daraus die entsprechenden Transformationen ableitet. Der Nachteil ist jedoch, dass hierzu das gesuchte System idealerweise bereits bekannt sein müsste, weshalb hiervon in der Praxis ebenfalls nur Näherungslösungen abgeleitet werden können. Es konnte gezeigt werden, dass sich WDAF als Sonderfall in das EAF-Konzept einordnen lässt.

In [5] wurde ein weiterer Transformationsbereichs-Ansatz eingeführt ("Transform-Domain Adaptive Filtering", TDAF), welcher die Forderung nach der Systemzerlegung zunächst aufgibt, und stattdessen durch die mehrkanalige Signaltransformation die Kreuzkorrelationsmatrix der Eingangssignale diagonalisiert, was in einer besseren numerischen Konditionierung für die Adaption resultiert.

Es lässt sich zeigen, dass sich alle oben genannten Ansätze durch orthogonale Transformationen beschreiben lassen. Diese wurden in [3] für gegebene Transformationen zu einem einheitlichen Konzept zusammengefasst. In diesem Zusammenhang lässt sich zudem zeigen, dass sich die allgemeinen raum-zeitlichen Transformationen durch Ineinanderschachtelung von räumlichen Transformationen und dem FDAF für die zeitlichen Komponenten darstellen lässt. In Fig. 3 ist dieser zweistufige Ansatz aus zeitlichen und räumlichen Transformationen symbolisiert. Der akustische Echokompensator 40 weist einen ersten Block 41 zur zeitlichen Transformation des mehrkanaligen Audiosignals auf, das von dem fernen Senderaum 31 kommt. Der erste Transformationsblock 41 ist mit einem zweiten Block 42 zur räumlichen Transformation gekoppelt, der von einer Matrix $\underline{C}1$ repräsentiert wird. Dieser ist wiederum mit einem adaptiven Filter 43 gekoppelt, das eine Übertragungsfunktion $\hat{\underline{H}}$ aufweist.

Der akustische Echokompensator weist weiterhin einen dritten Block 51 zur zeitlichen Transformation der Mikrofonsignale des nahen Raumes 33 auf. Dieser ist mit einem vierten Block 52 zur räumlichen Transformation gekoppelt, der von einer Matrix $\underline{C}_2$ repräsentiert wird. Die Ausgangssignale des vierten Blocks 52 werden jeweils an Addierer 54 angelegt, die jeweils ein Ausgangssignal des adaptiven Filters 43 empfangen. Die Addierer 54 bilden jeweils ein Differenzsignal $\underline{e}_1$, bis $\underline{e}_Q$, das an die Eingänge eines fünften Blocks 55 angelegt wird. Der fünfte Block 55 dient zur inversen räumlichen Transformation der Differenzsignale, die durch die Matrix $\underline{C}_2^{-1}$ repräsentiert wird. Der fünfte Block 55 ist mit einem sechsten Block 56 zur inversen zeitlichen Transformation gekoppelt. Das adaptive Filter 43 weist mehrere Einzelfilter 44 auf, die jeweils ein Differenzsignal eines Addierers 54 erhalten und die Einzelfilter derart steuern, dass das entsprechende Differenzsignal $\underline{e}_1$, bis $\underline{e}_Q$ minimiert wird. Die Matrizen $\underline{C}_1$ und $\underline{C}_2$ repräsentieren demnach nur die (frequenzselektiven) räumlichen Transformationen.

Die Aufgabe der vorliegenden Erfindung ist ein Verfahren und eine Vorrichtung zur adaptiven MIMO-Filterung in dynamisch angepassten Transformationsbreichen bereitzustellen, bei dem die Adaption verbessert ist. Die Erfindung ermöglicht, die Leistungsfähigkeit der adaptiven MIMO-Filterung in Transformationsbereichen durch geeignet bestimmte, aus den gegebenen Signalen dynamisch angepasste Transformationen zu erhöhen. Für die Adaption der Transformationsblöcke wird mit der Erfindung darüberhinaus auch eine flexible Adaptionssteuerung eingeführt, insbesondere in Abhängigkeit von der Rechenleistung.

Diese Aufgabe wird gelöst mit den Merkmalen der unabhängigen Patentansprüche. Die abhängigen Ansprüche betreffen bevorzugte Ausgestaltungen der Erfindung.

Die Erfindung basiert auf folgenden Grundgedanken.

Unter der oben erwähnten und üblichen Annahme eines Least-Squares-Optimierungskriteriums für die Schätzung der adaptiven Filterkoeffizienten, beschreibt die sog. Wiener-Hopf-Gleichung [1] die optimale Lösung im raum-zeitlich transformierten Bereich als

$$\underline{H} = \underline{T}_{xx}^{-1}(m)\underline{T}_{xy}(m), \tag{1}$$

wobei $\underline{H}$ die Koeffizientenmatrix der Dimension PLxQ ist mit FIR-Filterlänge L, Zahl der Eingangskanäle P und Zahl der Ausgangskanäle Q. $\underline{T}_{xx}(m)$ und $\underline{T}_{xy}(m)$ sind die Korrelationsmatrizen aller Eingangs-, bzw. Eingangs- und Ausgangszielsignale im raum-zeitlich transformierten Bereich. Diese Korrelationsmatrizen weisen eine Blockstruktur auf, wobei die Einzelblöcke jeweils die Auto- oder Kreuzkorrelationen für L zeitliche Verschiebungen der Signale enthalten [1]. Die unterschiedlichen Blöcke der Matrizen ergeben sich durch die unterschiedlichen Kanalkombinationen (d.h., $P^2$ Blöcke in $\underline{T}_{xx}(m)$ und PxQ Blöcke in $\underline{T}_{xy}(m)$).

Mittels der räumlichen Transformationsmatrizen $\underline{C}_1$ und $\underline{C}_2$ (siehe Fig. 3) lassen sich die Korrelationsmatrizen folgendermaßen ausdrücken:

$$\underline{T}_{xx}(m) = \underline{C}_1^T \underline{S}_{xx}(m)\underline{C}_1, \tag{2}$$

$$\underline{T}_{xy}(m) = \underline{C}_1^T \underline{S}_{xy}(m)\underline{C}_2, \tag{3}$$

wobei $\underline{S}_{xx}(m)$ und $\underline{S}_{xy}(m)$ die entsprechenden Korrelationsmatrizen mit analoger Blockstruktur, jedoch im lediglich zeitlich transformierten Bereich darstellen.

Das erfindungsgemäße Verfahren optimiert nun die Transformationsmatrizen $\underline{C}_1$ und $\underline{C}_2$ derart, dass $\underline{T}_{xx}(m)$ und $\underline{T}_{xy}(m)$ Jeweils block-diagonal werden. Entsprechend der obigen Wiener-Hopf-Gleichung ergibt sich daraus eine ebenfalls block-diagonale Koeffizientenmatrix $\underline{H}$, was genau der oben beschriebenen gewünschten Entkopplung des adaptiven MIMO-Systems entspricht, sofern die Block-Diagonalisierung über einen ausreichend langen Zeitraum durchgeführt wird. Weiterhin ergibt sich durch die Block-Diagonalisierung der EingangsKorrelationsmatrix $\underline{T}_{xx}(m)$ eine we-sentliche numerische Verbesserung für die Adaption der Filterkoeffizienten [1]. Die Block-Diagonalisierung von $\underline{T}_{xy}(m)$ bedeutet, dass nach Optimierung von $\underline{C}_2$ bei bereits gegebenem $\underline{C}_1$ im Transformationsbereich nur noch das Wunsch-Ausgangssignal $y_1$ mit dem Eingangssignal $x_1$, korreliert ist, $y_2$ nur noch mit $x_2$, usw. Da aber auch die Eingangssignale bereits durch die Block-Diagonalisierung von $\underline{T}_{xx}(m)$ entkoppelt sind, bedeutet dies bei Anwendung über einen längeren Zeitraum jeweils eine Signalseparation der Ein- und Ausgangskanäle. Für das erfindungsgemäße Verfahren zur überwachten adaptiven Filterung können alternativ auch die bekannten Techniken zur Systementkopplung und Korrelationsentkopplung mittels Independent Component Analysis (ICA) eingesetzt werden. Die ICA wird üblicherweise zur blinden adaptiven Filterung für Quellenseparation eingesetzt (siehe z.B. [9], [10], [11]). Der sog. Expectation-Maximization (EM)-Algorithmus, z.B. [12], ist ebenfalls für die Erfindung einsetzbar.

Bei adaptiven Filterproblemen, insbesondere in der Sprach- und Audiosignalverarbeitung, wird die Adaption der Koeffizienten i.d.R. kontinuierlich iterativ durchgeführt, um möglichen Systemänderungen zeitlich folgen zu können. Diese iterative Vorgehensweise wird in dem erfindungsgemäßen Verfahren durch die fortlaufende Schätzung der Trans-formationsmatrizen $\underline{C}_1$, $\underline{C}_2$ in den Iterationsschritten erweitert, wobei die Iterationsschritte zur Schätzung der Transformationsmatrizen und die Iterationsschritte zur Schätzung der adaptiven Filterkoeffizienten vorzugsweise alternierend ausgeführt werden.

Eine bevorzugte Ausführungsform des erfindungsgemäßen Verfahrens besteht pro Iteration aus folgenden Verarbeitungsschritten:

- zeitliche und räumliche Transformation der Eingangssignale $x_1$, $x_2$, ...$x_P$, sowie zeitliche und räumliche Transfor-mation der Wunsch-Ausgangssignale $y_1$, $y_2$, ...$y_Q$. Hierbei gehen die räumlichen Transformationen $\underline{C}_1$, $\underline{C}_2$ zunächst von bestimmten Initialwerten, beispielsweise Einheitsmatrizen aus. Vorzugsweise jedoch wird in den Initialwerten für die Transformationsmatrizen $\underline{C}_1$, $\underline{C}_2$ bereits eventuelles Vorwissen, z.B. über akustische Ausbreitungseigenschaften, berücksichtigt. Vorzugsweise ist dieses Vorwissen durch die modale Zerlegung der Freifeldausbreitung gegeben, wie bei WDAF [6]. Damit ist sichergestellt, dass die Performance des erfindungsgemäβen Verfahrens mindestens der des WDAF nach dem gegenwärtigem Stand der Technik entspricht, oder darüber liegt.

- eine iterative Verbesserung der Transformationsmatrix $\underline{C}_1$ basierend auf den Eingangsdaten, entsprechend Gl. (2). Dies kann z.B. mittels der bekannten Verfahren der ICA erfolgen oder dem EM-Algorithmus. Vorzugsweise wird dieser Schritt jedoch mittels einer Iterativen SVD-Berechnung nach [13] durchgeführt, wodurch schrittweise zunehmend mehr Daten berücksichtigt werden, und immer mehr Moden des mehrkanaligen Eingangssignals berücksichtigt werden, ggf. basierend auf den initialen Moden der Freifeldausbreitung, wie oben beschrieben.

- Berechnung einer entsprechend verbesserten Transformationsmatrix $\underline{C}_2$ basierend auf Gl. (3) unter Zuhilfenahme der bisher berechneten Transformationsmatrix $\underline{C}_1$ und den Eingangs-und Wunsch-Ausgangssignalen.

- Alternativ werden sowohl die räumliche Transformationsmatrix $\underline{C}_1$ als auch die räumliche Transformationsmatrix $\underline{C}_2$ basierend auf den Eingangsdaten entsprechend Gl. (3) iterativ verbessert. Vorzugsweise werden hierbei für die räumlichen Transformationsmatrizen $\underline{C}_1$, $\underline{C}_2$ Initialwerte eingesetzt, die vorab durch Bestimmung von Systemeigenschaften bestimmt werden.

- Entsprechend der aktuell zur Verfügung stehenden Rechenleistung des Systems, und/oder entsprechend des aktuell bestimmten Fortschritts der Block-Diagonalisierung des Systems, kann die Update-Rate der Transformationsmatrizen $\underline{C}_1$, $C_2$ auch vorübergehend reduziert werden.

- Zur Schätzung des aktuellen Fortschritts der Block-Diagonalisierung für die Steuerung der Update-Rate der Transformationsmatrizen $\underline{C}_1$, $C_2$ wird erfindungsgemäß ein Kompaktierungsmaß verwendet, welches die aktuell erreichbare Dominanz der Hauptdiagonalen gegenüber der Nebendiagonalen widerspiegelt, z.B. Energiekompaktierung nach [7] oder Optimierung mittels $L_1$-Norm. Bei dem Kompaktierungsmaß mittels $L_1$-Norm werden nur Absolutwerte von entsprechenden Matrixelementen aufsummiert. Ein weiteres Kompaktierungsnorm ist die "Frobenius-Norm" bei der alle quadrierten Einträge der entsprechenden Matrix aufsummiert werden. Für die beiden Transformationsmatrizen können wahlweise unterschiedliche Kompaktierungsmaße verwendet werden.

- Adaption der Filterkoeffizienten. Hierzu kann ein bekannter ein- oder mehrkanaliger Algorithmus zur adaptiven Filterung verwendet werden, z.B. [1]. Vorzugsweise wird der FDAF-Algorithmus, z.B. [2], angewandt.

- Vorzugsweise wird aus Effizienzgründen die bereits geschätzte Eingangskorrelationsmatrix auch für den adaptiven Filteralgorithmus, z.B. [2] verwendet, da diese hierzu ebenfalls benötigt wird.

- Die Restfehlersignale des Adaptionsalgorithmus' werden (falls für die jeweilige Anwendung gewünscht) wieder zurück in den Orts-Zeit-Bereich transformiert.

Die Erfindung wird nachstehend anhand einer bevorzugten Ausführungsform und der Zeichnungen näher erläutert. Es zeigen:

Fig. 1 ein Blockschaltbild für eine einkanalige adaptive Filterung,

Fig. 2 ein Blockschaltbild für eine mehrkanalige adaptive Filterung,

Fig. 3 ein Prinzipschaltbild einer mehrkanaligen Echokompensation im Transformationsbereich,

Fig. 4 ein Blockschaltbild für eine mehrkanalige adaptive Filterung im Transformationsbereich,

Fig. 5 eine bevorzugte Ausführungsform des erfindungsgemäßen Systems für die Anwendung bei einer mehrkanaligen akustischen Echokompensation und

Fig. 6 eine Illustration einer Block-Diagonalisierung einer Matrix, die beispielhaft aus 2 x 2 Blöcken besteht.

Fig. 5 zeigt eine bevorzugte Ausführungsform des oben beschriebenen Grundsystems für die Anwendung zur mehrkanaligen akustischen Echokompensation. Zur Schätzung der räumlichen Eingangstransformationsmatrix $\underline{C}_1$ wird hier die oben genannte rekursive SVD (single value decomposition) verwendet. Weiterhin werden zur Initialisierung der räumlichen Transformationsmatrizen $\underline{C}_1$, $\underline{C}_2$ die oben genannten Freifeldlösungen aus dem WDAF-Ansatz eingesetzt. Zur Adaption der einkanaligen entkoppelten Filter dient der FDAF-Algorithmus.

Vorzugsweise wird das erfindungsgemäße Verfahren zur mehrkanaligen akustischen Echokompensation durchgeführt, wenn im lokalen Raum niemand spricht bzw. keine akustischen Signale generiert werden mit Ausnahme der von den Lautsprechern ausgegebenen Signale, die vom fernen Raum stammen. Für diesen Fall werden von den Mikrofonen Signale aufgenommen, die von den Lautsprecherausgaben stammen.

Die in Fig. 5 gezeigte Ausführungsform eines akustischen Echokompensators 140 ist zum Teil vergleichbar mit der Ausführungsform, die anhand der Fig. 3 beschrieben wird. Ein erster Block 141 zur zeitlichen Transformation eines mehrkanaligen Audiosignals, das von dem fernen Senderaum 131 kommt, ist mit einem zweiten Block 142 zur räumlichen Transformation gekoppelt. Der zweite Block 142 zur räumlichen Transformation wird von einer Matrix $\underline{C}_1$ repräsentiert. Dieser zweite Block zur räumlichen Transformation ist mit einem adaptiven Filter 144, 145 gekoppelt, das eine Übertragungsfunktion $\hat{\underline{H}}$ aufweist. Das mehrkanalige Audiosignal $x_1$, $x_2$ ...$x_P$ wird über Leitungen 135 an ein Lautsprecherarray 137 im nahen Raum 133 übertragen. Das Lautsprecherarray 137 weist eine Anzahl P Lautsprecher auf. In dem nahen Raum 133 ist weiterhin ein Mikrofonarray mit einer Anzahl Q Mikrofonen angeordnet. Die von den Mikrofonen aufgenommenen Signale werden an einen dritten Block 151 zur zeitlichen Transformation der Mikrofonsignale des nahen Raumes geleitet. Der dritte Transformationsblock 151 ist mit einem vierten Block 152 zur räumlichen Transformation gekoppelt. Dieser wird von einer Matrix $\underline{C}_2$ repräsentiert. Die Ausgangssignale des vierten Blocks 152 werden jeweils an Addierer 154 angelegt. Die Addierer sind weiterhin mit Ausgängen des adaptiven Filters 144 verbunden. Jeder der Addierer 154 bildet ein Differenzsignal, das an einen fünften Block 155 zur inversen räumlichen Transformation angelegt wird. Der fünfte Block 155 zur inversen räumlichen Transformation wird repräsentiert von einer Matrix $\underline{C}_2^{-1}$, Der fünfte Block zur inversen räumlichen Transformation ist mit einem sechsten Block 156 zur inversen zeitlichen Transformation gekoppelt.

Weiterhin weist die Ausführungsform von Fig. 5 Mittel auf zur Anpassung der Transformationsmatrizen $\underline{C}_1$ des zweiten Blocks 142 und $\underline{C}_2$ des vierten Blocks 152. Im Einzelnen ist hier ein erster Schätzblock 161 zur $\underline{C}_1$-Schätzung vorgesehen, der als Eingangssignale die Ausgangssignale des ersten Blocks 141 zur zeitlichen Transformation erhält. In dem Ausführungsbeispiel führt dieser erste Schätzblock 161 eine rekursive SVD (Singular Value Decomposition) durch. Die bei jedem Iterationsschritt verbesserte Transformationsmatrix $\underline{C}_1$ wird an den zweiten Block 142 zur räumlichen Transformation ausgegeben. Ein zweiter Schätzblock 163 zur $\underline{C}_2$-Schätzung erhält zum einen die Ausgangssignale des ersten Blocks 141 und zum anderen die Ausgangssignale des dritten Blocks 151. In diesem Ausführungsbeispiel erfolgt die $\underline{C}_2$-Schätzung mittels Kanalseparation. Der zweite Schätzblock 163 liefert die iterativ verbesserten Werte der Transfonnationsmatrix $\underline{C}_2$ an den vierten Block 152 zur räumlichen Transformation. Außerdem liefert der erste Schätzblock 161 die Werte für die Transformationsmatrix $\underline{C}_1$ an den zweiten Schätzblock 163. Der erste und der zweite Schätzblock 161, 163 werden durch eine Steuerungseinrichtung 164 gesteuert, die in dem gezeigten Ausführungsbeispiel mittels eines Kompaktierungsmaßes die Update-Rate der Transformationsmatrizen $\underline{C}_1$, $\underline{C}_2$ steuern. Die Ausführungsform weist außerdem einen dritten Schätzblock 162 auf, der als Eingangssignale die Ausgangssignale des zweiten Blocks 142 zur räumlichen Transformation erhält. Der dritte Schätzblock 162 liefert die Werte der Korrelationsmatrix an den ersten und zweiten Schätzblock 161, 163 und die Steuerungseinrichtung 164.

Weiterhin kann der dritte Schätzblock 162 die Werte der Korrelationsmatrix an die Einrichtung 145 zur Adaption der Filterkoeffizienten liefern.

Die Einrichtung 145 zur Adaption der Filterkoeffizienten erhält als Eingangssignale die Ausgangssignale des zweiten Blocks 142 und die Differenzsignale der Addierer 154. Die einzelnen Filter 144 erhalten die adaptierten Filterkoeffizienten von der Einrichtung 145.

Die in Fig. 5 gezeigte Ausführungsform führt zunächst eine zeitliche Transformation der Eingangssignale durch. In einem weiteren Schritt werden die zeitlich transformierten Eingangssignale mittels einer räumlichen Transformationsmatrix $\underline{C}_1$ räumlich transformiert. In gleicher Weise werden die Mikrofonsignale zunächst zeitlich transformiert und die zeitlich transformierten Signale mittels einer räumlichen Transformationsmatrix $\underline{C}_2$ räumlich transformiert. Erfindungsgemäß werden die Transformationsmatrizen $\underline{C}_1$, $\underline{C}_2$ adaptiv geändert. Ausgehend von einer jeweiligen räumlichen Transformationsmatrix $\underline{C}_1$ bzw. $\underline{C}_2$ die bestimmte Initialwerte aufweist, werden die Werte der beiden Transformationsmatrizen $\underline{C}_1$ und $\underline{C}_2$ in aufeinanderfolgenden Iterationsschritten verbessert. Ziel ist dabei, die Block-Diagonalisierung des Systems.

Bei der Adaption eines Echokompensators wird davon ausgegangen, dass im nahen Raum niemand spricht, d.h. keine Geräusche vorhanden sind, mit Ausnahme von Ausgaben der Lautsprecher, die vom fernen Raum stammen. Die erfindungsgemäße Adaption ermöglicht eine Anpassung des Systems an den jeweiligen nahen Raum hinsichtlich der Platzierung der Lautsprecher, der Mikrofone, aber auch der jeweiligen Schallausbreitung in dem nahen Raum. Änderungen im nahen Raum wie sie durch das Öffnen von Fenstern oder durch im Raum vorhandene Personen auftreten können, können erfindungsgemäß adaptiert werden.

Mit Hilfe des erfindungsgemäßen Verfahrens werden in einem ersten Schritt die Korrelationsmatrizen so bearbeitet, dass die Untermatrizen diagonalisiert werden. Das heißt die Werte entlang der Diagonalen sind immer gleich. Das gilt sowohl für die Hauptdiagonale als auch für die Nebendiagonale. In einem weiteren Schritt werden die Korrelationsmatrizen nochmals diagonalisiert und zwar im Ortsbereich.

In einem Beispiel sind im nahen Raum zwei Lautsprecher 137 vorhanden, sowie zwei Mikrofone 139 vorgesehen. Dieses akustische System kann als 2 x 2 Blockmatrix beschrieben werden. Diese 2 x 2 Blockmatrix weist vier Untermatrizen auf, von denen jede Untermatrix die Pfade zwischen den Lautsprechern und den Mikrofonen beschreibt.

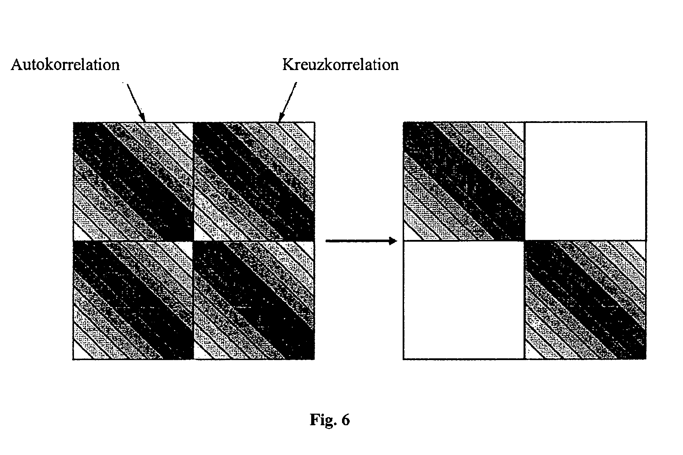

Das Beispiel für die Blockdiagonalisierung einer Korrelationsmatrix mit 2 x 2 Blöcken ist in Fig. 6 gezeigt. Im linken Teil von Fig. 6 ist eine Matrix mit 2 x 2 Blöcken gezeigt, von denen die jeweilige Untermatrix die Autokorrelation, entspricht dem ersten Quadranten links oben, und der zweite Block die Kreuzkorrelation, entspricht dem zweiten Quadranten rechts oben, darstellt. Die Block-Diagonalisierung der Matrix ist im rechten Teil von Fig. 6 dargestellt. Hier weist der erste Quadrant und der dritte Quadrant (links oben und rechts unten) jeweils eine Untermatrix auf, so dass diese Matrix in der Hauptdiagonalen blockdiagonalisiert ist. In anderen Ausführungsformen mit mehr als zwei Lautsprechern bzw. mehr als zwei Mikrofonen sind entsprechend mehrere Untermatrizen in einer Matrix vorhanden.

Die vorliegende Erfindung wurde anhand von Beispielen beschrieben. Es ist ersichtlich für den Fachmann, dass verschiedene Änderungen der Ausführungsformen durchgeführt werden können, ohne den Schutzbereich der vorliegenden Erfindung zu verlassen. Der Schutzbereich der vorliegenden Erfindung ist nicht auf die in der Beschreibung erläuterten Verfahren und Vorrichtungen beschränkt sondern wird durch die in den Ansprüchen definierten Verfahren und Vorrichtungen und deren Äquivalente definiert.

**Literatur**

[1] S. Haykin, Adaptive Filter Theory, Prentice Hall, 1991.

[2] H. Buchner, J. Benesty und W. Kellermann, "Multichannel frequency-domain adaptive algorithms with application to acoustic echo cancellation," in J. Benesty et al., (Hrsg.), Adaptive signal Processing:Application to real-world problems, Springer-Verlag, Berlin/Heidelberg, 2003.

[3] H. Buchner und S. Spors, "A general derivation of wave-domain adaptive filtering and application to acoustic echo cancellation," in Proc. Asilomar Conference on Signals, Systems, and Computers, Pacific Grove, CA, USA, Okt. 2008.

[4] S. Spors, H. Buchner und R. Rabenstein, "Eigenspace adaptive filtering for efficient preequalization of acoustic MIMO systems," in European Signal Processing Conference (EUSIPCO), 2006.

[5] S. Spors und H. Buchner, "Multichannel transform-domain adaptive filtering: A two-stage approach and illustration for acoustic echo cancellation," in 11th International Workshop on Acoustic Echo and Noise Control (IWAENC), 2008.

[6] H. Buchner, S. Spors und W. Kellermann, "Wave-Domain Adaptive Filtering: acoustic echo cancellation for full-duplex systems based on wave-field synthesis," in IEEE Int. Conference on Acoustics, Speech, and Signal Processing, vol. 4, 2004.

[7] S. Spors, H. Buchner, R. Rabenstein, W. Herbordt, "Active listening room compensation for massive multichannel sound reproduction systems using wave-domain adaptive filtering," Journal of the Acoustical Society of America, vol. 122, no. 1, pp. 354-369.

[8] Deutsches Patent DE10351793A1, H. Buchner, W. Herbordt, S. Spors, W. Kellermann: Vorrichtung und Verfahren zum Verarbeiten eines Eingangssignals, Nov. 2003.

[9] A. Hyvärinen, J. Karhunen und E. Oja, Independent Component Analysis, Wiley & Sons, New York, 2001.

[10] H. Buchner, R. Aichner und W. Kellermann, "TRINICON-based blind system identification with application to multiple-source localization and separation," In S. Makino, T.-W. Lee, and S. Sawada (Hrsg.), Blind Speech Separation, Springer-Verlag, Berlin/Heidelberg, pp. 101-147, Sept. 2007.

[11] European Patent EP 1070390B1, L. Parra, C. Spence: Convolutive blind source separation using a multiple decorrelation method, Europäische Patentschrift 1070390B1, Anmeldetag: 08.04.1999 mit Priorität 08.04.1998, veröffentlicht 22.06.2005, Patentklasse (IPC) H03H 21/00.

[12] S. Roweis, "EM Algorithms for PCA and SPCA" in Advances in Neural Information Processing Systems, MIT Press, pp. 626-632, 1998.

[13] S.H. Golub, "Some modified matrix eigenvalue problems", SIAM Review, The Society for Industrial and Applied Mathematics, pp. 318-334, 1973.

**Patentansprüche**

1. Verfahren zum adaptiven MIMO-Filtern in dynamisch angepassten Transformationsbereichen, wobei ein durch eine Koeffizientenmatrix $\underline{H}$ beschreibbares adaptives System eine Zahl P Eingangskanäle und eine Zahl Q Ausgangskanäle aufweist, mit folgenden Schritten:

   a) zeitliche und räumliche Transformation von Eingangssignalen,
   b) zeitliche und räumliche Transformation von Wunsch-Ausgangssignalen,
   c) Bilden der Koeffizientenmatrix $\underline{H}$ gemäß folgender Gleichung

$$\underline{H}=\underline{T}_{xx}^{-1}(m)\underline{T}_{xy}(m) \qquad\qquad 1)$$

   wobei $\underline{H}$ die Koeffizientenmatrix mit einer Dimension PL x Q ist, wobei L eine FIR-Filterlänge, P eine Zahl der Eingangskanäle und Q eine Zahl der Ausgangskanäle ist, und wobei $\underline{T}_{xx}(m)$ und $\underline{T}_{xy}(m)$ die Korrelationsmatrizen aller Eingangssignale bzw. aller Eingangssignale und Wunsch-Ausgangssignale im raumzeitlich transformierten Bereich sind,
   d) Beschreiben der Korrelationsmatrizen mithilfe von räumlichen Transformationsmatrizen $\underline{C}_1$ und $\underline{C}_2$ gemäß folgenden Gleichungen:

$$\underline{T}_{xx}(m)=\underline{C}_1^{T}\underline{S}_{xx}(m)\underline{C}_1, \qquad\qquad 2)$$

$$\underline{T}_{xy}(m)=\underline{C}_1^{T}\underline{S}_{xy}(m)\underline{C}_2, \qquad\qquad 3)$$

   wobei $\underline{S}_{xx}(m)$ und $\underline{S}_{xy}(m)$ die entsprechenden Korrelationsmatrizen mit analoger Blockstruktur im zeitlich transformierten Bereich darstellen und
   e) Optimieren der räumlichen Transformationsmatrizen $\underline{C}_1$ und $C_2$ derart, dass die Korrelationsmatrizen $\underline{T}_{xx}(m)$ und $\underline{L}_{xy}(m)$ jeweils block-diagonal werden.

2. Verfahren nach Anspruch 1, wobei zum Block-Diagonalisieren der Korrelationsmatrizen $\underline{T}_{xx}(m)$ und $\underline{T}_{xy}(m)$ die räumliche Transformationsmatrix $\underline{C}_1$ basierend auf den Eingangsdaten entsprechend Gleichung 2) iterativ verbessert wird, wobei vorzugsweise für die räumliche Transformationsmatrix $\underline{C}_1$ Initialwerte eingesetzt werden, die vorab durch Bestimmung von Systemeigenschaften bestimmt werden,
Berechnen einer verbesserten räumlichen Transformationsmatrix $\underline{C}_2$ basierend auf Gleichung 3) unter Verwendung der bisher berechneten räumlichen Transformationsmatrix $\underline{C}_1$ und den Eingangs- und Wunsch-Ausgangssignalen, und Wiederholen der zuvor beschriebenen Schritte zur iterativen Verbesserung der räumlichen Transformationsmatrizen $\underline{C}_1$ und $\underline{C}_2$.

3. Verfahren nach Anspruch 1, wobei zum Block-Diagonalisieren der Korrelationsmatrizen $\underline{T}_{xx}(m)$ und $\underline{T}_{xy}(m)$ die räumliche Transformationsmatrix $\underline{C}_1$ und die räumliche Transformationsmatrix $\underline{C}_2$ basierend auf den Eingangsdaten entsprechend Gleichung 3) iterativ verbessert wird, wobei vorzugsweise für die räumlichen Transformationsmatrizen $\underline{C}_1$ und $\underline{C}_2$ Initialwerte eingesetzt werden, die vorab durch Bestimmung von Systemeigenschaften bestimmt werden, unter Verwendung der Eingangs- und Wunsch-Ausgangssignale, und
Wiederholen des zuvor beschriebenen Schrittes zur iterativen Verbesserung der räumlichen Transformationsmatrizen $\underline{C}_1$ und $\underline{C}_2$.

4. Verfahren nach Anspruch 2 oder 3, wobei die Wiederholung der iterativen Verbesserung der räumlichen Transformationsmatrizen $\underline{C}_1$ und $\underline{C}_2$ mit einer bestimmten Update-Rate durchgeführt wird und wobei die Update-Rate einstellbar ist, vorzugsweise auf der Basis einer zur Verfügung stehenden Rechenleistung des Systems und/oder entsprechend einem aktuell bestimmten Fortschritt der Block-Diagonalisierung der Korrelationsmatrizen $\underline{T}_{xx}(m)$ und $\underline{T}_{xy}(m)$.

5.  Verfahren nach Anspruch 4, wobei der Fortschritt der Block-Diagonalisierung der Korrelationsmatrizen $\underline{T}_{xx}(m)$ und $\underline{T}_{xy}(m)$ durch Schätzen bestimmt wird unter Verwendung eines Kompaktierungsmaßes, welches die aktuell erreichbare Dominanz der Hauptdiagonalen gegenüber der Nebendiagonalen der Korrelationsmatrizen $\underline{T}_{xx}(m)$ und $\underline{T}_{xy}(m)$ wiedergibt.

6.  Verfahren nach Anspruch 5, wobei die Kompaktierungsmaße für die beiden Transformationsmatrizen $\underline{C}_1$ und $\underline{C}_2$ vorzugsweise gleich sind.

7.  Verfahren nach einem der Ansprüche 1 bis 6, ferner mit dem Schritt:

    Adaption von Filterkoeffizienten, wobei vorzugsweise die geschätzte Eingangskonrelationsmatrix für den adaptiven Filteralgorithmus verwendet wird.

8.  Verfahren nach Anspruch 7, wobei Restfehlersignale des Adaptionsalgorithmus in den Ort-Zeit-Bereich zurücktransformiert werden.

9.  Vorrichtung zum adaptiven MIMO-Filtem in dynamisch angepassten Transformationsbereichen, wobei ein durch eine Koeffizientenmatrix $\underline{H}$ beschreibbares adaptives System eine Zahl P Eingangskanäle und eine Zahl Q Ausgangskanäle aufweist, mit:

    a) einem ersten Block (141) zur zeitlichen Transformation von Eingangssignalen,
    b) einem zweiten Block (142) zur räumlichen Transformation der vom ersten Block (141) ausgegebenen Signale,
    c) einem dritten Block (151) zur zeitlichen Transformation von Wunsch-Ausgangssignalen,
    d) einem vierten Block (152) zur räumlichen Transformation der vom dritten Block ausgegebenen Signale,
    e) einer Einrichtung zum Optimieren einer räumlichen Transformationsmatrix $\underline{C}_1$ des zweiten Blocks (142) und zum Optimieren einer räumlichen Transformationsmatrix $\underline{C}_2$ des vierten Blocks (152) gemäß einem Verfahren nach einem der Ansprüche 1 bis 8.

10. Vorrichtung nach Anspruch 9, wobei die Einrichtung zum Optimieren der räumlichen Transformationsmatrix $\underline{C}_1$ einen ersten Schätzblock (161) aufweist, der als Eingangssignale die Ausgangssignale des ersten Blocks (141) erhält und der eine $\underline{C}_1$-Schätzung durchführt und Werte der Transformationsmatrix $\underline{C}_1$ an den zweiten Block (142) ausgibt.

11. Vorrichtung nach Anspruch 9 oder 10, wobei die Einrichtung zum Optimieren der räumlichen Transformationsmatrix $\underline{C}_2$ einen zweiten Schätzblock (163) aufweist, der als Eingangssignale die Ausgangssignale des ersten Blocks (141) und die Ausgangssignale des dritten Blocks (151) erhält und eine $\underline{C}_2$-Schätzung durchführt und die Werte der Transformationsmatrix $\underline{C}_2$ an den vierten Block (152) ausgibt.

12. Vorrichtung nach Anspruch 10 oder 11, mit einer Steuereinrichtung (164) zur Steuerung einer Update-Rate der Transformationsmatrizen $\underline{C}_1$, $\underline{C}_2$ mittels eines Kompaktierungsmaßes, wobei die Steuereinrichtung (164) mit dem ersten Schätzblock (161) und/oder mit dem zweiten Schätzblock (162) verbunden ist.

13. Vorrichtung nach einem der Ansprüche 9 bis 12, mit einem dritten Schätzblock (162), der als Eingangssignale die Ausgangssignale des zweiten Blocks (142) erhält und Werte einer Korrelationsmatrix $\underline{T}_{xx}(m)$ ausgibt.

**Claims**

1.  A method for adaptive MIMO filtering in dynamically adjusted transformation areas, wherein an adaptive system that is describable by a coefficient matrix $\underline{H}$ comprises a number P of input channels and a number Q of output channels, the method comprising the following steps:

    a) temporal and spatial transformation of input signals;
    b) temporal and spatial transformation of desired output signals;

c) formation of the coefficient matrix $\underline{H}$ according to the following equation:

$$\underline{H}=\underline{T}_{xx}^{-1}(m)\underline{T}_{xy}(m) \qquad\qquad 1)$$

wherein $\underline{H}$ represents the coefficient matrix having a dimension of PL x Q, wherein L represents an FIR filter length, P represents a number of input channels and Q a number of output channels and $T_{xx}(m)$ and $T_{xy}(m)$ represent the correlation matrices of all input signals or all input signals as well as all desired output signals, respectively, in the spatiotemporally transformed area;

d) description of the correlation matrices using spatial transformation matrices $\underline{C}_1$ and $\underline{C}_2$ according to the following equations:

$$\underline{T}_{xx}(m)=\underline{C}_1^T\underline{S}_{xx}(m)\underline{C}_1 \qquad\qquad 2)$$

$$\underline{T}_{xy}(m)=\underline{C}_1^T\underline{S}_{xy}(m)\underline{C}_2 \qquad\qquad 3)$$

wherein $\underline{S}_{xx}(m)$ and $\underline{S}_{xy}(m)$ represent the respective correlation matrices having an analogous block structure in the temporally transformed area; and

e) optimisation of the spatial transformation matrices $\underline{C}_1$ and $\underline{C}_2$ such that each of correlation matrices $\underline{T}_{xx}(m)$ and $\underline{T}_{xy}(m)$ becomes block-diagonal.

2. The method of claim 1, wherein, for block-diagonalising the correlation matrices $\underline{T}_{xx}(m)$ and $\underline{T}_{xy}(m)$, the spatial transformation matrix $\underline{C}_1$ is iteratively enhanced on the basis of the input data according to equation 2), wherein preferably initial values, which were determined in advance by determination of system properties, are used for the spatial transformation matrix $\underline{C}_1$;

calculation of an enhanced spatial transformation matrix $\underline{C}_2$ based on the equation 3) using the spatial transformation matrix $\underline{C}_1$ calculated so far and the input and desired output signals; and

repetition of the aforementioned steps for iteratively enhancing the spatial transformation matrices $\underline{C}_1$ and $\underline{C}_2$.

3. The method of claim 1, wherein, for block-diagonalising the correlation matrices $\underline{T}_{xx}(m)$ and $\underline{T}_{xy}(m)$, the spatial transformation matrix $\underline{C}_1$ and the spatial transformation matrix $\underline{C}_2$ are iteratively enhanced on the basis of the input data according to equation 3), wherein preferably initial values, which were determined in advance by determination of system properties, are used for the spatial transformation matrices $\underline{C}_1$ and $\underline{C}_2$ using the input and desired output signals; and

repetition of the aforementioned step for iteratively enhancing the spatial transformation matrices $\underline{C}_1$ and $\underline{C}_2$.

4. The method of claim 2 or 3, wherein the repetition of the iterative enhancement of the spatial transformation matrices $\underline{C}_1$ and $\underline{C}_2$ is performed at a specific update rate and wherein the update rate is adjustable, preferably on the basis of an available system computing power and/or in accordance with a currently determined block-diagonalisation progress of the correlation matrices $\underline{T}_{xx}(m)$ and $\underline{T}_{xy}(m)$.

5. The method of claim 4, wherein the block-diagonalisation progress of the correlation matrices $\underline{T}_{xx}(m)$ and $\underline{T}_{xy}(m)$ is determined by estimation using a compacting measure that reflects the currently achievable dominance of the main diagonals with respect to the secondary diagonals of the correlation matrices $\underline{T}_{xx}(m)$ and $\underline{T}_{xy}(m)$.

6. The method of claim 5, wherein the compacting measures for the two transformation matrices $\underline{C}_1$ and $\underline{C}_2$ are preferably equal.

7. The method of any of claims 1 to 6, further comprising the following step:

adaption of filter coefficients, wherein preferably the estimated input correlation matrix is used for the adaptive filter algorithm.

8. The method of claim 7, wherein residual error signals of the adaption algorithm are re-transformed into the spatiotemporal range.

9. A device for adaptive MIMO filtering in dynamically adjusted transformation areas, wherein an adaptive system that is describable by a coefficient matrix $\underline{H}$ comprises a number P of input channels and a number Q of output channels, the device comprising:

a) a first block (141) for temporally transforming input signals;
b) a second block (142) for spatially transforming the signals output by the first block (141);
c) a third block (151) for temporally transforming desired output signals;
d) a fourth block (152) for spatially transforming the signals output by the third block;
e) means for optimising a spatial transformation matrix $\underline{C}_1$ of the second block (142) and for optimising a spatial transformation matrix $\underline{C}_2$ of the fourth block (152) according to a method of any of claims 1 to 8.

10. The device of claim 9, wherein the means for optimising the spatial transformation matrix $\underline{C}_1$ comprises a first estimation block (161) that receives the output signals of the first block (141) as input signals and performs a $\underline{C}_1$ estimation and outputs values of the transformation matrix $\underline{C}_1$ to the second block (142).

11. The device of claim 9 or 10, wherein the means for optimising the spatial transformation matrix $\underline{C}_2$ comprises a second estimation block (163) that receives the output signals of the first block (141) and the output signals of the third block (151) as input signals and performs a $\underline{C}_2$ estimation and outputs the values of the transformation matrix $\underline{C}_2$ to the fourth block (152).

12. The device of claim 10 or 11, comprising control means (164) for controlling an update rate of the transformation matrices $\underline{C}_1$, $\underline{C}_2$ using a compacting measure, wherein the control means (164) is connected to the first estimation block (161) and/or the second estimation block (162).

13. The device of any of claims 9 to 12, comprising a third estimation block (162) that receives the output signals of the second block (142) as input signals and outputs values of a correlation matrix $\underline{T}_{xx}(m)$.

**Revendications**

1. Procédé de filtrage MIMO adaptatif dans des plages de transformation dynamiquement adaptées, un système adaptatif descriptible par une matrice de coefficient H comportant un nombre P de canaux d'entrée et un nombre Q de canaux de sortie, comportant les étapes suivantes :

a) transformation temporelle et spatiale de signaux d'entrée,
b) transformation temporelle et spatiale de signaux de sortie souhaités,
c) formation de la matrice de coefficient H conformément à l'équation suivante :

$$\underline{H} \;=\; \underline{T}_{xx}{}^{-1}(m)\,\underline{T}_{xy}(m) \hspace{4cm} 1)$$

où H est la matrice de coefficient avec une dimension PL x Q, L une longueur de filtre FIR, P un nombre de canaux d'entrée et Q un nombre de canaux de sortie, et où $T_{xx}(m)$ et $\underline{T}_{xy}(m)$ sont les matrices de corrélation de tous les signaux d'entrée ou de tous les signaux d'entrée et signaux de sortie souhaités dans la plage transformée temporellement et spatialement,
d) description des matrices de corrélation au moyen de matrices de transformation spatiales $\underline{C}_1$ et $\underline{C}_2$ conformément aux équations suivantes :

$$\underline{T}_{xx}(m) \ = \ \underline{C}_1{}^T\underline{S}_{xx}(m)\,\underline{C}_1, \hspace{4cm} 2)$$

$$\underline{T}_{xy}(m) \ = \ \underline{C}_1{}^T\underline{S}_{xy}(m)\,\underline{C}_2, \hspace{4cm} 3)$$

où $\underline{S}_{xx}(m)$ et $\underline{S}_{xy}(m)$ représentent les matrices de corrélation correspondantes avec une structure par bloc analogue dans la plage transformée temporellement, et

e) optimisation des matrices de transformation spatiales $\underline{C}_1$ et $C_2$ de telle manière que les matrices de corrélation $\underline{T}_{xx}(m)$ et $\underline{T}_{xy}(m)$ deviennent respectivement des diagonales par blocs.

2. Procédé selon la revendication 1, où, pour transformer en diagonales par blocs les matrices de corrélation $\underline{T}_{xx}(m)$ et $\underline{T}_{xy}(m)$, la matrice de transformation spatiale $\underline{C}_1$ est améliorée itérativement sur la base dès données d'entrée conformément à l'équation 2), où des valeurs initiales sont appliquées préférentiellement pour la matrice de transformation spatiale $\underline{C}_1$, lesquelles sont préalablement déterminées par détermination de propriétés du système, calcul d'une matrice de transformation spatiale $\underline{C}_2$ améliorée sur la base de l'équation 3) en recourant à la matrice de transformation spatiale $\underline{C}_1$ actuellement calculée et aux signaux d'entrée et signaux de sortie souhaités, et répétition des étapes susmentionnées pour l'amélioration itérative des matrices de transformation spatiales $\underline{C}_1$ et $\underline{C}_2$.

3. Procédé selon la revendication 1, où, pour transformer en diagonales par blocs les matrices de corrélation $T_{xx}(m)$ et $\underline{T}_{xy}(m)$, la matrice de transformation spatiale $\underline{C}_1$ et la matrice de transformation spatiale $\underline{C}_2$ sont améliorées itérativement sur la base des données d'entrée conformément à l'équation 3), où des valeurs initiales sont appliquées préférentiellement pour les matrices de transformation spatiales $\underline{C}_1$ et $\underline{C}_2$, lesquelles sont préalablement déterminées par détermination de propriétés du système, en recourant aux signaux d'entrée et signaux de sortie souhaités, et répétition des étapes susmentionnées pour l'amélioration itérative des matrices de transformation spatiales $C_1$ et $\underline{C}_2$.

4. Procédé selon la revendication 2 ou la revendication 3, où la répétition de l'amélioration itérative des matrices de transformation spatiales $\underline{C}_1$ et $\underline{C}_2$ est effectuée avec une fréquence de mise à jour définie et où ladite fréquence de mise à jour est réglable, préférentiellement sur la base d'une capacité de calcul disponible du système et/ou en fonction d'une progression actuellement définie de la transformation en diagonales par blocs des matrices de corrélation $\underline{T}_{xx}(m)$ et $\underline{T}_{xy}(m)$.

5. Procédé selon la revendication 4, où la progression de la transformation en diagonales par blocs des matrices de corrélation $\underline{T}_{xx}(m)$ et $\underline{T}_{xy}(m)$ est définie par estimation en recourant à une mesure de compactage exprimant la dominance actuellement atteignable des diagonales principales par rapport aux diagonales auxiliaires des matrices de corrélation $\underline{T}_{xx}(m)$ et $\underline{T}_{xy}(m)$.

6. Procédé selon la revendication 5, où les mesures de compactage sont préférentiellement égales pour les deux matrices de transformation $\underline{C}_1$ et $\underline{C}_2$.

7. Procédé selon l'une des revendications 1 à 6, comprenant en outre l'étape suivants :

adaptation de coefficients de filtre, la matrice de corrélation d'entrée estimée étant préférentiellement utilisée pour l'algorithme adaptatif de filtre.

8. Procédé selon la revendication 7, où des signaux d'erreur résiduelle de l'algorithme d'adaptation sont retransformés dans la plage espace-temps.

9. Dispositif de filtrage MIMO adaptatif dans des plages de transformation dynamiquement adaptées, un système adaptatif descriptible par une matrice de coefficient $\underline{H}$ comportant un nombre P de canaux d'entrée et un nombre Q de canaux de sortie, comportant :

a) un premier bloc (141) pour la transformation temporelle de signaux d'entrée,

b) un deuxième bloc (142) pour la transformation spatiale des signaux émis par le premier bloc (141),

c) un troisième bloc (151) pour la transformation temporelle de signaux de sortie souhaités,

d) un quatrième bloc (152) pour la transformation spatiale des signaux émis par le troisième bloc,

e) un dispositif d'optimisation d'une matrice de transformation spatiale $\underline{C}_1$ du deuxième bloc (142) et d'optimisation d'une matrice de transformation spatiale $\underline{C}_2$ du quatrième bloc (152) suivant un procédé selon l'une des revendications 1 à 8.

10. Dispositif selon la revendication 9, où le dispositif d'optimisation de la matrice de transformation spatiale $\underline{C}_1$ comporte un premier bloc d'estimation (161) recevant les signaux de sortie du premier bloc (141) en tant que signaux d'entrée et exécutant une estimation $C_1$, et transmettant au deuxième bloc (142) les valeurs de la matrice de transformation $\underline{C}_1$.

11. Dispositif selon la revendication 9 ou la revendication 10, où le dispositif d'optimisation de la matrice de transformation spatiale $\underline{C}_2$ comporte un deuxième bloc d'estimation (163) recevant les signaux de sortie du premier bloc (141) et les signaux de sortie du troisième bloc (151) en tant que signaux d'entrée et exécutant une estimation $C_2$, et transmettant au quatrième bloc (152) les valeurs de la matrice de transformation $\underline{C}_2$.

12. Dispositif selon la revendication 10 ou la revendication 11, comportant un dispositif de commande (164) pour la commande d'une fréquence de mise à jour des matrices de transformation $\underline{C}_1$, $\underline{C}_2$ au moyen d'une mesure de compactage, ledit dispositif de commande (164) étant relié au premier bloc d'estimation (161) et/ou au deuxième bloc d'estimation (162).

13. Dispositif selon l'une des revendications 9 à 12 comportant un troisième bloc d'estimation (162) recevant les signaux de sortie du deuxième bloc (142) en tant que signaux d'entrée et délivrant les valeurs d'une matrice de corrélation $\underline{T}_{xx}(m)$.

**Fig. 1**

**Fig. 2**

**Fig. 3**

**Fig. 4**

**Fig. 5**

Autokorrelation          Kreuzkorrelation

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10351793 A1

- EP 1070390 B1, L. Parra, C. Spence

**In der Beschreibung aufgeführte Nicht-Patentliteratur**

- **S. HAYKIN.** Adaptive Filter Theory. Prentice Hall, 1991
- Multichannel frequency-domain adaptive algorithms with application to acoustic echo cancellation. **H. BUCHNER ; J. BENESTY ; W. KELLERMANN et al.** Adaptive signal Processing:Application to real-world problems. Springer-Verlag, 2003
- A general derivation of wave-domain adaptive filtering and application to acoustic echo cancellation. **H. BUCHNER ; S. SPORS.** Proc. Asilomar Conference on Signals, Systems, and Computers. Pacific Grove, 2008
- **S. SPORS ; H. BUCHNER ; R. RABENSTEIN.** Eigenspace adaptive filtering for efficient preequalization of acoustic MIMO systems. *European Signal Processing Conference (EUSIPCO,* 2006
- **S. SPORS ; H. BUCHNER.** Multichannel transform-domain adaptive filtering: A two-stage approach and illustration for acoustic echo cancellation. *11th International Workshop on Acoustic Echo and Noise Control (IWAENC,* 2008
- **H. BUCHNER ; S. SPORS ; W. KELLERMANN.** Wave-Domain Adaptive Filtering: acoustic echo cancellation for full-duplex systems based on wave-field synthesis. *IEEE Int. Conference on Acoustics, Speech, and Signal Processing,* 2004, vol. 4

- **S. SPORS ; H. BUCHNER ; R. RABENSTEIN ; W. HERBORDT.** Active listening room compensation for massive multichannel sound reproduction systems using wave-domain adaptive filtering. *Journal of the Acoustical Society of America,* vol. 122 (1), 354-369
- **H. BUCHNER ; W. HERBORDT ; S. SPORS ; W. KELLERMANN.** *Vorrichtung und Verfahren zum Verarbeiten eines Eingangssignals,* November 2003
- **A. HYVÄRINEN ; J. KARHUNEN ; E. OJA.** Independent Component Analysis. Wiley & Sons, 2001
- TRINICON-based blind system identification with application to multiple-source localization and separation. **H. BUCHNER ; R. AICHNER ; W. KELLERMANN.** Blind Speech Separation. Springer-Verlag, September 2007, 101-147
- EM Algorithms for PCA and SPCA. **S. ROWEIS.** Advances in Neural Information Processing Systems. MIT Press, 1998, 626-632
- Some modified matrix eigenvalue problems. **S.H. GOLUB.** SIAM Review. The Society for Industral and Applied Mathematics, 1973, 318-334